# EUROPÄISCHE PATENTSCHRIFT

(11) **EP 2 522 207 B1**
(45) Veröffentlichungstag und Bekanntmachung des Hinweises auf die Patenterteilung: **03.12.2014**
(21) Anmeldenummer: 12401078.6
(22) Anmeldetag: 04.05.2012
(51) Int. Cl.: A01B 69/00

(54) **Landwirtschaftliche Verteilmaschine**
Agricultural distributor
Machine de répartition agricole

(30) Priorität: 12.05.2011 DE 102011050296
(43) Veröffentlichungstag der Anmeldung: 14.11.2012
(73) Patentinhaber: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Resch, Rainer, 49170 Hagen a TW (DE)

(56) Entgegenhaltungen:
- EP-A1- 1 213 198
- EP-A1- 1 772 350
- DE-A1- 10 045 140
- US-A1- 2002 060 103
- US-A1- 2007 152 424
- US-A1- 2007 213 902
- US-A1- 2011 022 267

## Beschreibung

Die Erfindung betrifft eine landwirtschaftliche Verteilmaschine.

Durch die EP 1 772 350 A1 ist eine landwirtschaftliche Fahrzeugkombination mit Verteilmaschine, die als Feldspritze ausgebildet ist, bekannt. Bei dieser Verteilmaschine ist eine geschwindigkeitsabhängige Steuerungseinrichtung vorgesehen, die auf die Mittel zur Verstellung der Deichsel, damit die Räder der Verteilmaschine zumindest annähernd der Radspur der Hinterräder der Zugmaschine folgen, eingewirkt und zwar derart, dass oberhalb einer festgelegten Fahrgeschwindigkeit aufgrund der an das Stellelement von der Steuerungseinrichtung übermittelten Signale die Deichsel im verringerten Maße verschwenkt wird. Hierbei wird der Deichselwinkel, der auch ein Maß für den Lenkwinkel ist, erfasst und entsprechend im Bordcomputer hinterlegter Zusammenhänge zwischen Deichselwinkel und Fahrgeschwindigkeit wird der Deichselwinkel in an die Fahrgeschwindigkeit angepasster Weise verändert. Hierdurch soll erreicht werden, dass beim Durchfahren von Kurven mit hohen Fahrgeschwindigkeiten die Feldspritze nicht umkippt. Hier wird für den Sicherheitsaspekt das spurgetreue Nachlaufen der Räder in der Spur der Zugmaschine aufgegeben. Auf der Straße, wenn die Verteilmaschine mit hoher Geschwindigkeit bewegt wird, kann es dennoch in ungünstigen Fällen, insbesondere wenn der Vorratsbehälter der Verteilmaschine noch relativ gut gefüllt ist, zu kritischen Situationen kommen.

Der Erfindung liegt die Aufgabe zu Grunde eine Geschwindigkeitssteuerung für die Verteilmaschine vorzuschlagen, wobei in verbesserter Weise eine erhöhte Sicherheit beim Durchfahren von Kurven erreicht wird.

Diese Aufgabe wird mit den Merkmalen der Patentansprüche 1 und/oder 2 gelöst.

Infolge dieser Maßnahmen liefert der Lenkwinkel die Eingangsgröße für eine maximal zulässige Geschwindigkeit.

Durch den Lenkwinkel wird also festgelegt, welche maximale Geschwindigkeit bei dem jeweiligen Lenkwinkel, d.h. bei dem vorgegebenen Kurvenradius der zu durchfahrenden Kurve, erlaubt ist. Es wird also die maximale Höchstgeschwindigkeit bestimmt, die beim Durchfahren der jeweiligen Kurve erlaubt werden kann, um einen sicheren Fahrzustand in jedem Falle zu gewährleisten. Somit wird also ein sicherer Fahrzustand immer garantiert.

Dies bedeutet, dass je größer der Lenkwinkel für die Räder bzw. je kleiner der Kurvenradius ist, umso geringer ist die zulässige maximale Fahrgeschwindigkeit in der Kurve.

Weitere Einzelheiten der Erfindung sind der Beispielsbeschreibung und den Zeichnungen zu entnehmen. Hierbei zeigen
- Fig. 1: die Verteilmaschine beim Fahren auf einer vorgegebenen Kurvenstrecke,
- Fig. 2: ein Flussdiagramm zur Bestimmung der max. Geschwindigkeit beim Fahren und
- Fig. 3: Diagramm mit der max. zulässigen Fahrgeschwindigkeit entsprechend des erforderlichen Linkwinkels und/oder des Kurvenradius der durchfahrenden Kurve.

An der als Ackerschlepper ausgebildeten Zugmaschine 1 ist die landwirtschaftliche Verteilmaschine 2, die im Ausführungsbeispiel als eine ein Verteilergestänge 3 aufweisende Feldspritze ausgebildet ist, mittels der Zugdeichsel 4 an die Anhängevorrichtung des Ackerschleppers 1 angekoppelt. Die Feldspritze 2 weist ein Laufräder 5 aufweisendes Fahrgestell auf.

Dem Ackerschlepper 1 bzw. der Feldspritze 2 sind ein Sensorsystem zur Ermittlung der Fahrgeschwindigkeit sowie ein nicht dargestellter Sensor zur Ermittlung des Lenkwinkels der lenkbaren Vorderrädern 6 der Zugmaschine 1 zugeordnet. Das Sensorsystem zur Ermittlung der Fahrgeschwindigkeit sowie der Sensor zur Ermittlung des Lenkwinkels sind über nicht dargestellte Datenleitung mit einem nicht dargestellten Bordcomputer, der auf dem Ackerschlepper 1 angeordnet ist, verbunden.

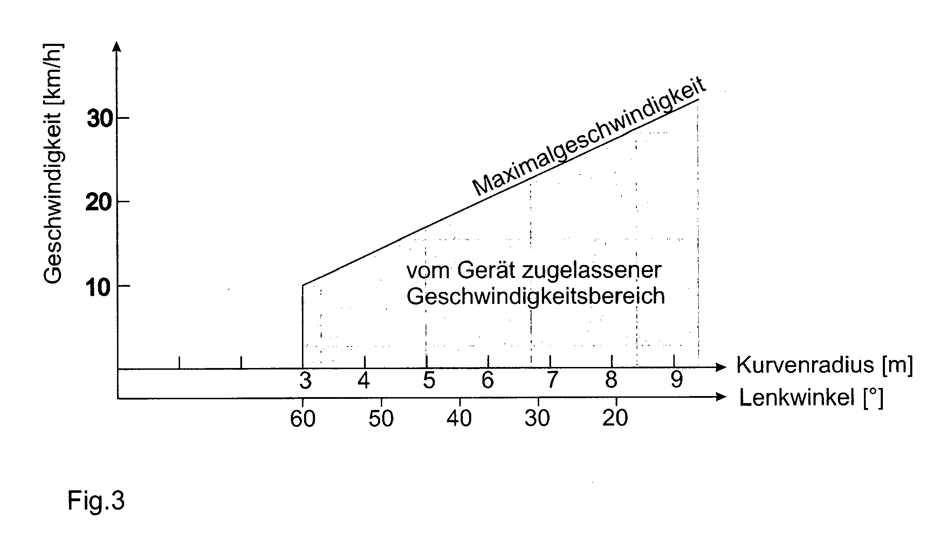

In einer Speichereinrichtung des Bordcomputers sind die Zusammenhänge zwischen Lenkwinkel und maximal zulässiger Fahrgeschwindigkeit der Verteilmaschine in Abhängigkeit des Lenkwinkels der Laufräder 6 hinterlegt. Der jeweilige Lenkwinkels der Laufräder steht in direktem Zusammenhang mit dem Kurvenradius R der zu durchfahrenden Kurve 7, wie dieses in dem Diagramm in Fig. 3 anschaulich dargestellt ist.

Um eine Kurve 7 zu durchfahren werden die lenkbaren Laufräder 6 der Zugmaschine 1 in bekannter Weise entsprechend eingeschlagen. Während des Durchfahrens werden die jeweiligen Daten über den aktuellen Lenkwinkels dem Bordcomputer übermitteln. Aufgrund der in der Speichereinrichtung des Bordcomputers hinterlegten Zusammenhänge zwischen Lenkwinkel und maximaler zulässiger Fahrgeschwindigkeit wird die jeweils aktuelle zulässige maximale Fahrgeschwindigkeit von dem Bordrechner errechnet. Diese maximale Fahrgeschwindigkeit wird auf dem Display des Bordcomputers angezeigt und/oder gleichzeitig in die Geschwindigkeitssteuerung und/oder -regelung eingegriffen, ob zwar derart, dass die aufgrund der abgespeicherten Zusammenhänge hinterlegte maximale Fahrgeschwindigkeit entsprechend des jeweiligen tatsächlichen Lenkwinkels durch die Verteilmaschine 2 während des Fahrbetriebes nicht überschritten wird.

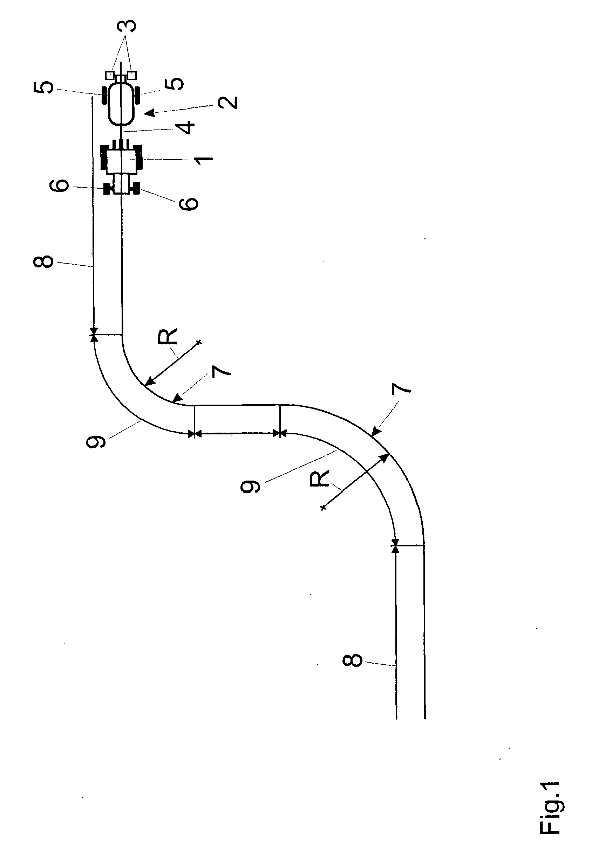

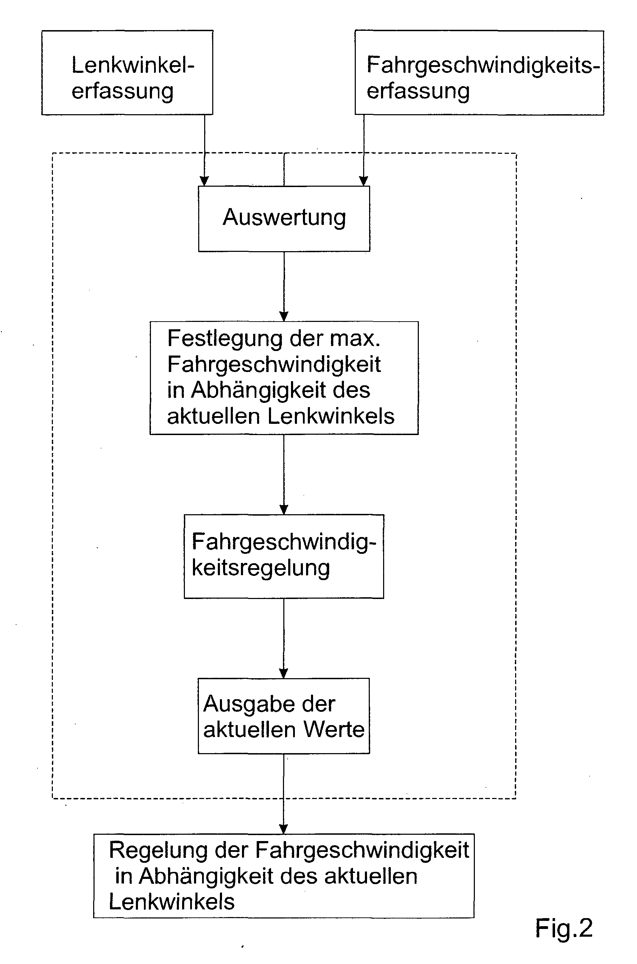

Die Funktionsweise der Geschwindigkeitssteuerung in Abhängigkeit des aktuellen Lenkwinkels bzw. des zu durchfahrenden Kurvenradius R der zu durchfahrenden Kurve 7 lässt sich wie folgt anhand der Fig. 1 und 2 wie folgt beschreiben:

Über den Sensor wird der Lenkwinkel erfasst, an den Bordcomputer in geeigneter Weise übermittelt und von dem in der Speichereinrichtung hinterlegten Auswerteprogramm in geeigneter Weise ausgewertet. Weiterhin wird von den Geschwindigkeitssensoren die tatsächliche Fahrgeschwindigkeit erfasst. Die entsprechenden Daten hierüber werden ebenfalls an das Auswerteprogramm des Bordcomputers in geeigneter Weise übermittelt.

Aufgrund der in dem Speicher des Bordcomputers hinterlegten Zusammenhänge zwischen Lenkwinkel und maximaler zulässiger Fahrgeschwindigkeit wird der maximal zulässige Fahrgeschwindigkeit wert errechnet. Hierauf basierend erfolgt die Geschwindigkeitsregelung und die entsprechenden Werte werden aktuell ausgegeben. Aufgrund der aktuellen ausgegebenen Werte erfolgt die Regelung der Fahrgeschwindigkeit in Abhängigkeit des aktuellen Lenkwinkels. Hierdurch ist sichergestellt, dass immer sichere Fahrsituationen gewährleistet sind, egal welche Kurvensituationen, wie sie in Fig. 1 dargestellt sind, von der Verteilmaschine 2 mit dem Ackerschlepper 1 durchfahren werden. Der Lenkwinkel liefert somit die Eingangsgröße für eine maximal zulässige Geschwindigkeit.

In den Bereichen 8 der Fahrstrecke wird eine gerade Strecke gefahren, in welchen keine Kippgefahr besteht. In den Kurvenbereichen 9 wird aufgrund des ermittelten Lenkwinkels, wie vor beschrieben, die maximal zulässige Geschwindigkeit errechnet. Der Bordcomputer gibt entsprechende Werte aus und stellt so durch die Ausgabewerte sicher, dass die maximal zulässige Fahrgeschwindigkeit in jeder Betriebssituation in geeigneter Weise eingehalten wird. Dies kann durch den Eingriff mittels geeigneter Mittel, die durch den Bordcomputer angesteuert werden, sichergestellt werden.

## Patentansprüche

1. Landwirtschaftliche Fahrzeugkombination mit Verteilmaschine, wie Feldspritze, Düngerstreuer oder Sämaschine mit einem Laufräder und Rahmen aufweisenden Fahrgestell, wobei die Verteilmaschine und/oder das die Verteilmaschine ziehende Zugfahrzeug lenkbare Laufräder aufweist, wobei zumindest einem der lenkbaren Laufräder zumindest ein Sensorelement zur Erfassung des Lenkwinkels zumindest eines der lenkbaren Laufräder zugeordnet ist, wobei für die Verteilmaschine und/oder dem Zugfahrzeug ein Bordcomputer vorgesehen ist, wobei die Sensorelemente die von den Sensorelementen erfassten Lenkwinkeldaten an den Bordcomputer übermitteln, wobei in der Speichereinrichtung des Bordcomputers Zusammenhänge zwischen Lenkwinkel und maximal zulässiger Fahrgeschwindigkeit der Verteilmaschine in Abhängigkeit des Lenkwinkels der Laufräder (6) hinterlegt sind, wobei anhand dieser hinterlegten Zusammenhänge der Bordcomputer mittels geeigneter Mittel in die Geschwindigkeitssteuerung und/oder - regelung eingreift und zwar derart, dass die aufgrund der abgespeicherten Zusammenhänge hinterlegte maximale Fahrgeschwindigkeit entsprechend des jeweiligen tatsächlichen Lenkwinkels durch die Verteilmaschine (2) während des Fahrbetriebes nicht überschreitbar ist.

2. Verfahren zum Betreiben einer landwirtschaftlichen Fahrzeugkombination mit Verteilmaschine, wie Feldspritze, Düngerstreuer oder Sämaschine mit einem Laufräder und Rahmen aufweisenden Fahrgestell, wobei die Verteilmaschine und/oder dass die Verteilmaschine ziehende Zugfahrzeug lenkbare Laufräder aufweist, wobei zumindest einem der lenkbaren Laufräder zumindest ein Sensorelement zur Erfassung des Lenkwinkels zumindest eines der lenkbaren Laufräder zugeordnet ist, wobei für die Verteilmaschine und/oder dem Zugfahrzeug ein Bordcomputer vorgesehen ist, wobei die Sensorelemente die von den Sensorelementen erfassten Lenkwinkeldaten an den Bordcomputer übermitteln, wobei in der Speichereinrichtung des Bordcomputers Zusammenhänge zwischen Lenkwinkel und maximal zulässiger Fahrgeschwindigkeit der Verteilmaschine in Abhängigkeit des Lenkwinkels der Laufräder (6) hinterlegt sind, wobei anhand dieser hinterlegten Zusammenhänge der Bordcomputer mittels geeigneter Mittel in die Geschwindigkeitssteuerung und/oder -regelung eingreift und zwar derart, dass die aufgrund der abgespeicherten Zusammenhänge die hinterlegte maximale Fahrgeschwindigkeit entsprechend des jeweiligen tatsächlichen Lenkwinkels durch die Verteilmaschine (2) während des Fahrbetriebes nicht überschreitbar ist.

## Claims

1. Agricultural vehicle combination comprising a distributor, such as a field sprayer, fertilizer spreader or seed drill with a chassis having running wheels and a frame, wherein the distributor and/or the traction vehicle towing the distributor has steerable running wheels, wherein at least one of the steerable running wheels is assigned at least one sensor element for sensing the steering angle of at least one of the steerable running wheels, wherein an on-board computer is provided for the distributor and/or the traction vehicle, wherein the sensor elements transmit the steering angle data, acquired by the sensor elements, to the on-board computer, wherein relationships between the steering angle and the maximum permissible velocity of the distributor are stored as a function of the steering angle of the running wheels (6) in the memory device of the on-board computer, wherein, on the basis of these stored relationships, the on-board computer intervenes, by means of suitable means, in the open-loop and/or closed-loop speed control system, specifically in such a way that the maximum velocity corresponding to the respective actual steering angle, said maximum velocity being saved on the basis of the stored relationships, cannot be exceeded by the distributor (2) during locomotion.

2. Method for operating an agricultural vehicle combination comprising a distributor, such as a field sprayer, fertilizer spreader or seed drill with a chassis having running wheels and a frame, wherein the distributor and/or the traction vehicle towing the distributor has steerable running wheels, wherein at least one of the steerable running wheels is assigned at least one sensor element for sensing the steering angle of at least one of the steerable running wheels, wherein an on-board computer is provided for the distributor and/or the traction vehicle, wherein the sensor elements transmit the steering angle data, acquired by the sensor elements, to the on-board computer, wherein relationships between the steering angle and the maximum permissible velocity of the distributor are stored as a function of the steering angle of the running wheels (6) in the memory device of the on-board computer, wherein, on the basis of these stored relationships, the on-board computer intervenes, by means of suitable means, in the open-loop and/or closed-loop speed control system, specifically in such a way that the maximum velocity corresponding to the respective actual steering angle, said maximum velocity being saved on the basis of the stored relationships, cannot be exceeded by the distributor (2) during locomotion.

## Revendications

1. Combinaison de véhicules agricoles présentant une machine de répartition, par exemple un dispositif d'aspersion de champ, un épandeur d'engrais ou une machine à semer qui présentent un châssis doté de roues de déplacement et d'un bâti,
la machine de répartition et/ou le véhicule tracteur qui tire la machine de répartition présentant des roues directrices,
au moins un élément de capteur qui saisit l'angle de direction d'au moins l'une des roues directrices étant associé à au moins l'une des roues directrices,
un ordinateur de bord étant prévu pour la machine de répartition et/ou pour le véhicule tracteur,
les éléments de capteur transmettant à l'ordinateur de bord les données d'angle de direction saisies par les éléments de capteur,
des dépendances entre l'angle de direction et la vitesse maximale admissible de déplacement de la machine de répartition en fonction de l'angle de direction des roues directrices (6) étant conservées dans le dispositif de mémoire de l'ordinateur de bord,
l'ordinateur de bord agissant à l'aide de ces dépendances conservées en mémoire dans l'ordinateur de bord sur la commande de vitesse et/ou la régulation de vitesse à l'aide de moyens appropriés, de telle sorte que la vitesse maximale de déplacement conservée sur la base des dépendances conservées en mémoire ne puisse être dépassée par la machine de répartition (2) pendant qu'elle se déplace selon l'angle de direction effectif.

2. Procédé de conduite d'une combinaison de véhicules agricoles présentant une machine de répartition, par exemple un dispositif d'aspersion de champ, un épandeur d'engrais ou une machine à semer qui présentent un châssis doté de roues de déplacement et d'un bâti,
la machine de répartition et/ou le véhicule tracteur qui tire la machine de répartition présentant des roues directrices,
au moins un élément de capteur qui saisit l'angle de direction d'au moins l'une des roues directrices étant associé à au moins l'une des roues directrices,
un ordinateur de bord étant prévu pour la machine de répartition et/ou pour le véhicule tracteur,
les éléments de capteur transmettant à l'ordinateur de bord les données d'angle de direction saisies par les éléments de capteur,
des dépendances entre l'angle de direction et la vitesse maximale admissible de déplacement de la machine de répartition en fonction de l'angle de direction des roues directrices (6) étant conservées dans le dispositif de mémoire de l'ordinateur de bord,
l'ordinateur de bord agissant à l'aide de ces dépendances conservées en mémoire dans l'ordinateur de bord sur la commande de vitesse et/ou la régulation de vitesse à l'aide de moyens appropriés, de telle sorte que la vitesse maximale de déplacement conservée sur la base des dépendances conservées en mémoire ne puisse être dépassée par la machine de répartition (2) pendant qu'elle se déplace selon l'angle de direction effectif.
